# EUROPEAN PATENT APPLICATION

(11) **EP 4 832 123 A1**
(43) Date of publication of application: **28.10.2026**
(21) Application number: 24915485.7
(22) Date of filing: 18.12.2024
(51) Int. Cl.: H01M 8/1004, H01M 8/1041, H01M 4/88, H01M 8/10

(54) **MEMBRANE-ELECTRODE ASSEMBLY FOR FUEL CELL AND FUEL CELL COMPRISING SAME**

(30) Priority: 05.01.2024 KR 20240001926
(71) Applicant: Kolon Industries, Inc., Seoul 07793 (KR)
(72) Inventor: KIM, Jun Young, Seoul 07793 (KR); KIM, Jung Ho, Seoul 07793 (KR); KONG, Nak Won, Seoul 07793 (KR); LEE, Eun Su, Seoul 07793 (KR); SONG, Kah Young, Seoul 07793 (KR)
(74) Representative: Vossius & Partner Patentanwälte Rechtsanwälte mbB
(86) International application number: PCT/KR2024/097120
(87) International publication number: WO 2025/147075

(57) **Abstract**

The present invention relates to a membrane-electrode assembly for a fuel cell and a fuel cell comprising same and, more specifically, to a membrane-electrode assembly for a fuel cell and a fuel cell comprising same, wherein by forming a separate radical protective layer comprising fucoidan and a radical scavenger other than fucoidan between a polymer electrolyte membrane and an electrode layer, deterioration of the electrolyte membrane due to radicals can be prevented, thereby greatly improving chemical resistance.

## Description

### Technical Field

The present disclosure claims the benefit of the filing date of Korean Patent Application No. 10-2024-0001926 filed with the Korean Intellectual Property Office on January 5, 2024, the entire contents of which are incorporated herein. The present disclosure relates to a membrane-electrode assembly for a fuel cell and a fuel cell including the same.

### Background Art

A polymer electrolyte membrane fuel cell (PEMFC) is a type of fuel cell that is gaining attention as a next-generation energy source. It is a fuel cell that uses a polymer membrane with hydrogen ion exchange properties as an electrolyte.

Fuel cells are batteries equipped with a power generation system that directly converts chemical energy from chemical reactions, such as an oxidation/reduction reaction between hydrogen contained in hydrocarbon fuel materials such as methanol, ethanol, and natural gas, and oxygen, into electrical energy. Due to their high energy efficiency and eco-friendly characteristics with low pollutant emissions, the fuel cells are gaining attention as a next-generation clean energy source that can replace fossil fuels.

The fuel cells may be classified according to the state and type of electrolyte into alkaline electrolyte fuel cells, polymer electrolyte membrane fuel cells (PEMFCs), etc. Among these fuel cells, the polymer electrolyte membrane fuel cells are attracting attention as portable, automotive, and home power supply devices due to their advantages such as a low operating temperature of less than 100°C, fast start-up and response characteristics, and excellent durability.

To summarize the reactions occurring in the polymer electrolyte fuel cell, when a fuel such as hydrogen gas is supplied to the anode, hydrogen ions (H⁺) and electrons (e⁻) are generated at the anode by hydrogen oxidation reaction. The generated hydrogen ions are transferred to the cathode through the polymer electrolyte membrane, and the generated electrons are transferred to the cathode through the external circuit. At the cathode, oxygen is supplied and combines with hydrogen ions and electrons, and water is produced by oxygen reduction reaction.

Meanwhile, there are still many technical barriers to overcome in order to realize the commercialization of the polymer electrolyte fuel cells, and essential challenges include realizing high performance, long lifespan, and reduced production costs. The component that has the most influence on them is the membrane-electrode assembly, and among the components of the membrane-electrode assembly, the polymer electrolyte membrane is a key factor that has the greatest impact on the performance and price of the membrane-electrode assembly.

Degradation of the electrolyte membrane is classified into chemical/electrochemical degradation and mechanical degradation. Among them, chemical/electrochemical degradation means that the polymer membrane is degraded by the attack of radicals/hydrogen peroxide generated within the cell, and is one of the main causes of shortening the lifespan of the fuel cell.

### DISCLOSURE

### Technical Problem

An object of the present disclosure is to provide a membrane-electrode assembly for a fuel cell that overcomes the degradation phenomenon caused by radicals generated during fuel cell operation.

Another object of the present disclosure is to provide a fuel cell with improved performance including the membrane-electrode assembly.

### Technical Solution

According to a first aspect of the present disclosure, there is provided a membrane-electrode assembly for a fuel cell, including: a polymer electrolyte membrane; a radical-scavenging layer formed on at least one surface of the polymer electrolyte membrane and containing a radical scavenger; and an electrode layer formed on the radical-scavenging layer, wherein the radical scavenger includes fucoidan.

According to a second aspect of the present disclosure, in the first aspect, the radical scavenger may further include at least one of transition metals, ions thereof, salts thereof, oxides thereof, nitrides thereof, and complexes thereof, carotenoids, flavonoids, vitamins, and glutathione.

According to a third aspect of the present disclosure, in the first aspect, fucoidan may be contained in an amount of 0.2 wt% or more and 1.0 wt% or less based on the total weight of the radical-scavenging layer containing fucoidan.

According to a fourth aspect of the present disclosure, in the second aspect, the radical-scavenging layer may include a first radical-scavenging layer and a second radical-scavenging layer, wherein at least one of the first radical-scavenging layer and the second radical-scavenging layer may contain fucoidan.

According to a fifth aspect of the present disclosure, in the fourth aspect, the first radical-scavenging layer may be positioned on the polymer electrolyte membrane, the second radical-scavenging layer may be positioned on the first radical-scavenging layer, and the content of a radical scavenger other than fucoidan in the first radical-scavenging layer may be higher than that in the second radical-scavenging layer.

According to a sixth aspect of the present disclosure, in the fifth aspect, the content of fucoidan in the first radical-scavenging layer and the content of fucoidan in the second radical-scavenging layer may be the same as or different from each other.

According to a seventh aspect of the present disclosure, in the fifth aspect, the radical scavenger other than fucoidan in the first radical-scavenging layer may be contained in an amount of 0.1 wt% or more and 20 wt% or less based on the total weight of the radical-scavenging layer.

According to an eighth aspect of the present disclosure, in the fifth aspect, the thickness ratio between the first radical-scavenging layer and the second radical-scavenging layer may be 10:1 to 1:10.

According to a ninth aspect of the present disclosure, in the first aspect, the radical-scavenging layer may include carbon nanofibers.

According to a tenth aspect of the present disclosure, in the fifth aspect, carbon nanofibers may be included only in the first radical-scavenging layer.

According to an eleventh aspect of the present disclosure, in the first aspect, the thickness of the radical-scavenging layer may be 10 nm or more and 2,000 nm or less.

According to a twelfth aspect of the present disclosure, in the first aspect, the electrode layer may include a catalyst layer formed on the surface of an electrode substrate.

According to a thirteenth aspect of the present disclosure, there is provided a fuel cell including the membrane-electrode assembly for a fuel cell according to the first aspect.

The features described in the above-described embodiment may be combined with other embodiments unless otherwise explicitly stated.

### Advantageous Effects

The radical-scavenging layer according to the present disclosure is capable of effectively scavenging radicals entering the polymer electrolyte membrane, thereby improving the chemical resistance and durability of the membrane-electrode assembly and ultimately improving the lifespan and performance of the fuel cell.

### Brief Description of Drawings

Fig. 1 is a schematic cross-sectional view of a membrane-electrode assembly according to one embodiment of the present disclosure.
Fig. 2 is a schematic cross-sectional view of a membrane-electrode assembly according to another embodiment of the present disclosure.
Fig. 3 is a schematic diagram illustrating the overall configuration of a fuel cell according to one embodiment of the present disclosure.

### Best Mode

Hereinafter, embodiments of the present disclosure will be described in detail with reference to the accompanying drawings so that those skilled in the art to which the present disclosure pertains can easily carry out the present disclosure. However, the present disclosure may be embodied in various different forms and is not limited to the embodiments described herein.

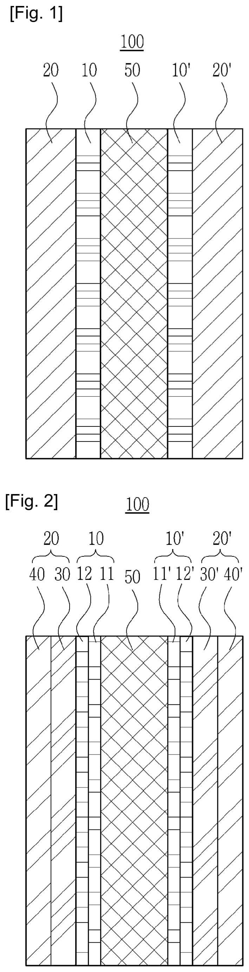

Fig. 1 is a schematic cross-sectional view of a membrane-electrode assembly according to one embodiment of the present disclosure. Referring to Fig. 1, a membrane-electrode assembly 100 includes a polymer electrolyte membrane 50 and electrode layers 20, 20' disposed at both sides of the polymer electrolyte membrane 50, respectively, and includes a radical-scavenging layer 10, 10' located on at least one side of the polymer electrolyte membrane 50 and positioned between each of the electrode layers 20, 20' and the polymer electrolyte membrane 50.

Although Fig. 1 shows an example of the membrane-electrode assembly 100 in which the radical-scavenging layers 10, 10' are formed on both surfaces of the polymer electrolyte membrane 50, the radical-scavenging layer may be located on only one of the cathode side and the anode side.

One embodiment of the present disclosure includes a membrane-electrode assembly for a fuel cell, including: the polymer electrolyte membrane 50; the radical-scavenging layer 10, 10' formed on at least one surface of the polymer electrolyte membrane 50 and containing a radical scavenger; and the electrode layer 20, 20' formed on the radical-scavenging layer, wherein the radical scavenger includes fucoidan.

According to one embodiment of the present disclosure, the polymer electrolyte membrane 50 is not particularly limited as long as it is a polymer electrolyte membrane that is used in a fuel cell, and an ion conductor contained in the polymer electrolyte membrane may be at least one of a general hydrocarbon-based polymer or a fluorinated polymer. The hydrocarbon-based polymer may be any known hydrocarbon-based polymer, for example, one of sulfonated poly (arylene ethers) (SPAEs), sulfonated poly(arylene sulfides) (SPASs), sulfonated polyimides (SPIs), polybenzimidazoles (PBIs), polyphenylenes (PPs), or polyetheretherketones (PEEKs). In addition, the fluorinated polymer may be any known fluorinated polymer, for example, one of Nafion, Asiplex, Flemion, polyvinylidene fluoride, hexafluoropropylene, trifluoroethylene, polytetrafluoroethylene, or copolymers thereof.

According to one embodiment of the present disclosure, the polymer electrolyte membrane may have a thickness of 5 µm or more and 200 µm or less in an unhumidified state.

According to one embodiment of the present disclosure, the radical-scavenging layer 10, 10' contains a radical scavenger, and thus functions to prevent radicals generated in the electrode layer 20, 20' from entering the polymer electrolyte membrane 50, thereby suppressing radical-induced degradation of the electrolyte membrane.

According to one embodiment of the present disclosure, the radical-scavenging layer 10, 10' may contain a radical scavenger in an interfacial adhesive layer that may be formed between the polymer electrolyte membrane 50 and the electrode layer 20, 20'.

The radical scavenger of the present disclosure basically includes fucoidan, and may further include other radical scavengers such as inorganic compounds in addition to fucoidan. Fucoidan may be extracted from seaweed and is a sulfated heteropolysaccharide having a backbone mainly composed of L-fucose residues linked by α-1,2 or α-1,3 bonds. Fucoidan can act as a radical scavenger through its antioxidant action and also has hydrogen ion conductivity due to the presence of sulfate groups.

According to one embodiment of the present disclosure, fucoidan is preferably distributed uniformly throughout the radical-scavenging layer 10, 10' in terms of improving hydrogen ion conductivity, and can also effectively block the entry of radicals into the electrolyte membrane.

According to one embodiment of the present disclosure, the radical-scavenging layer 10, 10' preferably further includes an antioxidant material as an additional radical scavenger in addition to fucoidan, wherein the additional radical scavenger may be at least one selected from the group consisting of transition metals (e.g., cerium (Ce), manganese (Mn), etc.), ions thereof, salts thereof, oxides thereof, nitrides thereof, and complexes thereof, carotenoids (e.g., lutein, lycopene, carotene, etc.), flavonoids (e.g., catechin, anthocyanin, etc.), vitamins (e.g., ascorbic acid, tocopherol, etc.), and glutathione. Preferably, the radical-scavenging layer may further include CeZrO₂.

According to one embodiment of the present disclosure, the content of fucoidan may be 0.2 wt% or more and 1.0 wt% or less based on the total weight of the radical-scavenging layer containing fucoidan. If the content of fucoidan is more than the upper limit of the above range, the performance of the cell may be degraded, and if the content of fucoidan is less than the lower limit of the above range, the radical scavenging effect may be reduced and thus the durability improvement effect may be insignificant. By controlling the content of fucoidan within the above-described range, it is possible to improve the chemical resistance and durability of the membrane-electrode assembly, and ultimately, to improve the lifespan and performance of the fuel cell.

According to one embodiment of the present disclosure, the radical-scavenging layer 10, 10' may be formed as a single layer, but may also be formed as a laminate of two or more layers.

According to one embodiment of the present disclosure, the radical-scavenging layer 10 includes a first radical-scavenging layer 11 and a second radical-scavenging layer 12, wherein at least one of the first radical-scavenging layer 11 and the second radical-scavenging layer 12 may contain fucoidan.

Referring to Fig. 2, Fig. 2 briefly illustrates an embodiment in which radical-scavenging layers 10, 10' are formed on both surfaces of a polymer electrolyte membrane 50, and each radical-scavenging layer 10, 10' is composed of a laminate of a first radical-scavenging layer 11, 11' and a second radical-scavenging layer 12, 12'.

According to one embodiment of the present disclosure, the first radical-scavenging layer 11, 11' and the second radical-scavenging layer 12, 12' may each independently contain fucoidan or fucoidan and an additional radical scavenger. As a specific example, the first radical-scavenging layer 11, 11' in contact with the polymer electrolyte membrane 50 may additionally contain CeZrO₂, and the second radical-scavenging layer 12, 12' may contain only fucoidan as a radical scavenger.

According to one embodiment of the present disclosure, the first radical-scavenging layer 11 may be positioned on the polymer electrolyte membrane 50, the second radical-scavenging layer 12 may be positioned on the first radical-scavenging layer 11, and the content of a radical scavenger other than fucoidan in the first radical-scavenging layer 11 may be higher than that in the second radical-scavenging layer 12. Specifically, the first radical-scavenging layer 11 may contain CeZrO₂.

The first radical-scavenging layer 11 and the second radical-scavenging layer 12 may have different densities of the radical scavenger other than fucoidan. As shown in Fig. 2, when the first radical-scavenging layer 11 is positioned on the side of the electrolyte membrane 50 and the second radical-scavenging layer 12 is positioned on the side of the electrode layer 20, the density of the radical scavenger other than fucoidan in the first radical-scavenging layer 11 is preferably higher than that in the second radical-scavenging layer 12. Fucoidan has hydrogen ion conductivity, but radical scavengers other than fucoidan generally have significantly lower or no hydrogen ion conductivity, and thus it is necessary to control the content of a radical scavenger other than fucoidan in order to improve hydrogen ion conductivity. Therefore, it is preferable in terms of both hydrogen ion conductivity and radical scavenging rate to primarily scavenge radicals in the second radical-scavenging layer 12, where the density of a radical scavenger other than fucoidan is relatively low, and then scavenge radicals with a radical scavenger other than fucoidan in the first radical-scavenging layer 11.

According to one embodiment of the present disclosure, the content of fucoidan in the first radical-scavenging layer 11 and the content of fucoidan in the second radical-scavenging layer 12 may be the same as or different from each other.

According to one embodiment of the present disclosure, a radical scavenger other than fucoidan in the first radical-scavenging layer may be contained in an amount of 0.1 wt% or more and 20 wt% or less based on the total weight of the radical-scavenging layer. Specifically, the content of a radical scavenger other than fucoidan in the first radical-scavenging layer may be, based on the total weight of the radical-scavenging layer, 0.2 wt% or more and 19 wt% or less, 0.3 wt% or more and 18 wt% or less, 0.4 wt% or more and 17 wt% or less, 0.5 wt% or more and 16 wt% or less, 0.6 wt% or more and 15 wt% or less, 0.7 wt% or more and 14 wt% or less, 0.7 wt% or more and 13 wt% or less, 0.8 wt% or more and 12 wt% or less, 0.9 wt% or more and 11 wt% or less, 1 wt% or more and 10 wt% or less, 2 wt% or more and 9 wt% or less, 3 wt% or more and 8 wt% or less, 4 wt% or more and 7 wt% or less, or 5 wt% or more and 6 wt% or less. If the content of a radical scavenger other than fucoidan is more than the upper limit of the above range, the performance of the cell may be degraded, and if the content is less than the lower limit of the above range, radical scavenging ability may be reduced.

According to one embodiment of the present disclosure, the density of a radical scavenger other than fucoidan in the second radical-scavenging layer 12 is lower than that in the first radical-scavenging layer 11, and thus the content of the radical scavenger other than fucoidan per unit volume in the second radical-scavenging layer 12 is lower than that in the first radical-scavenging layer 11.

If the density of the radical-scavenger other than fucoidan in the first radical-scavenging layer 11 is higher than the upper limit of the above-described range, a problem may arise in that hydrogen ion conductivity significantly decreases, and thus the efficiency of the fuel cell significantly decreases. If the density of the radical scavenger other than fucoidan is lower than the lower limit of the above-described range, there may be a problem in that a significant amount of radicals enter the electrolyte membrane, making it difficult to suppress the degradation of the electrolyte membrane. The density of the radical scavenger other than fucoidan in the second radical-scavenging layer 12 is preferably lower than that in the first radical-scavenging layer 11, and in extreme cases, the second radical-scavenging layer may contain only fucoidan as a radical scavenger.

According to one embodiment of the present disclosure, the weight ratio between the radical scavenger including fucoidan contained in the first radical-scavenging layer 11 and the radical scavenger other than fucoidan contained in the second radical-scavenging layer 12 may be 1:5 to 1:20. Specifically, the weight ratio between the radical scavenger including fucoidan contained in the first radical-scavenging layer 11 and the radical scavenger other than fucoidan contained in the second radical-scavenging layer 12 may be 1:6 to 1:20, 1:7 to 1:20, 1:8 to 1:20, 1:9 to 1:20, 1:10 to 1:20, 1:11 to 1:20, 1:12 to 1:20, 1:13 to 1:20, 1:14 to 1:20, 1:15 to 1:20, 1:16 to 1:20, 1:17 to 1:20, 1:18 to 1:20, or 1:19 to 1:20. When the weight ratio between the radical scavenger including fucoidan contained in the first radical-scavenging layer 11 and the radical scavenger other than fucoidan contained in the second radical-scavenging layer 12 satisfies the above-described range, the degradation phenomenon caused by radicals may be alleviated.

According to one embodiment of the present disclosure, the thickness ratio between the first radical-scavenging layer 11 and the second radical-scavenging layer 12 may be 10:1 to 1:10. Preferably, it may be 5:1 to 1:5, more preferably 2:1 to 1:2, and 2:1.

According to one embodiment of the present disclosure, the radical-scavenging layer 10 may include carbon nanofibers. The radical-scavenging layer 10 may include a polymeric form of fucoidan and thus may not include a separate support, but may include a separate carbon support to improve durability. The carbon support may be, for example, carbon nanofibers, and specifically, may be a support formed of carbon nanosheets.

According to one embodiment of the present disclosure, carbon nanofibers may be included only in the first radical-scavenging layer. Since carbon nanofibers have excellent electrical conductivity, they are preferably distributed only in a portion of the radical-scavenging layer 10 rather than being distributed throughout, and it is preferable to block the conduction of electricity generated in the electrode layer to the electrolyte membrane. Specifically, it is preferable that the second radical-shielding layer 12 in contact with the electrode layer 20 does not include carbon nanofibers, and carbon nanofibers are included only in the first radical-scavenging layer 11, so that the second radical-scavenging layer 12 may also function as an insulating layer.

According to one embodiment of the present disclosure, the thickness of the radical-scavenging layer may be 10 nm or more and 2,000 nm or less. Specifically, the thickness of the radical-scavenging layer may be 50 nm or more and 1,800 nm or less, 60 nm or more and 1,800 nm or less, 80 nm or more and 1,700 nm or less, 100 nm or more and 1,600 nm or less, 120 nm or more and 1,600 nm or less, 140 nm or more and 1,500 nm or less, 160 nm or more and 1,400 nm or less, 170 nm or more and 1,300 nm or less, 180 nm or more and 1,200 nm or less, 190 nm or more and 1,100 nm or less, or 200 nm or more and 1,000 nm or less. In addition, the thickness of the radical-scavenging layer on the cathode side and layer on the cathode side on the anode side may be the same or different. If the thickness of the radical-scavenging layer is less than the lower limit of the range described above, it may be difficult to prevent radicals from entering the polymer electrolyte membrane 50, due to the excessively small thickness. If the thickness of the radical-scavenging layer is more than the upper limit of the above-described range, a problem may arise in that the hydrogen ion conductivity of the membrane-electrode assembly is significantly reduced due to the radical-scavenging layer, and the efficiency of the fuel cell may decrease rapidly.

According to one embodiment of the present disclosure, the electrode layer may include a catalyst layer formed on the surface of an electrode substrate.

Referring to Fig. 2, the electrode 20, 20' includes an electrode substrate 40, 40' and a catalyst layer 30, 30' formed on the surface of the electrode substrate 40, 40', and may further include a microporous layer (not shown) containing conductive fine particles such as carbon powder or carbon black between the electrode substrate 40, 40' and the catalyst layer 30, 30' in order to facilitate material diffusion in the electrode substrate 40, 40'.

In the membrane-electrode assembly 100, the electrode 20 disposed on one side of the polymer electrolyte membrane 50 and causing an oxidation reaction that generates hydrogen ions and electrons from fuel transferred through the electrode substrate 40 to the catalyst layer 30 is referred to as an anode electrode, and the electrode 20' disposed on the other side of the polymer electrolyte membrane 50 and causing a reduction reaction that generates water from hydrogen ions supplied through the polymer electrolyte membrane 50 and an oxidant transferred through the electrode substrate 40' to the catalyst layer 30' is referred to as a cathode electrode.

The catalyst layers 30, 30' of the anode and cathode electrodes 20, 20' contain a catalyst. As the catalyst, any catalyst may be used, which participates in the cell reaction and may be used as a catalyst for a conventional fuel cell. Preferably, a platinum-based catalyst may be used.

The platinum-based catalyst include one selected from the group consisting of platinum (Pt), palladium (Pd), ruthenium (Ru), iridium (Ir), osmium (Os), a platinum-M alloy (where M is one or more selected from the group consisting of palladium (Pd), ruthenium (Ru), iridium (Ir), osmium (Os), gallium (Ga), titanium (Ti), vanadium (V), chromium (Cr), manganese (Mn), iron (Fe), cobalt (Co), nickel (Ni), copper (Cu), silver (Ag), gold (Au), zinc (Zn), tin (Sn), molybdenum (Mo), tungsten (W), lanthanum (La), and rhodium (Rh)) a non-platinum alloy, and combinations thereof. More preferably, it may be a combination of two or more metals selected from the group consisting of the above-described platinum-based catalyst metals, without being limited thereto, and any platinum-based catalyst metal may be used without limitation as long as it may be used in the art.

Specifically, the platinum-M alloy may be one or a mixture of two or more selected from the group consisting of Pt-Pd, Pt-Sn, Pt-Mo, Pt-Cr, Pt-W, Pt-Ru, Pt-Ru-W, Pt-Ru-Mo, Pt-Ru-Rh-Ni, Pt-Ru-Sn-W, Pt-Co, Pt-Co-Ni, Pt-Co-Fe, Pt-Co-Ir, Pt-Co-S, Pt-Co-P, Pt-Fe, Pt-Fe-Ir, Pt-Fe-S, Pt-Fe-P, Pt-Au-Co, Pt-Au-Fe, Pt-Au-Ni, Pt-Ni, Pt-Ni-Ir, Pt-Cr-Ir, and combinations thereof.

In addition, the non-platinum alloy may be one or a mixture of two or more selected from the group consisting of Ir-Fe, Ir-Ru, Ir-Os, Co-Fe, Co-Ru, Co-Os, Rh-Fe, Rh-Ru, Rh-Os, Ir-Ru-Fe, Ir-Ru-Os, Rh-Ru-Fe, Rh-Ru-Os and combinations thereof.

The catalyst may be the catalyst itself or may be supported on a carrier.

The carrier may be selected from among a carbon-based carrier, a porous inorganic oxide such as zirconia, alumina, titania, silica, or ceria, zeolite, etc. The carbon-based carrier may be at least one selected from the group consisting of graphite, Super P, carbon fibers, carbon sheets, carbon black, ketjen black, denka black, acetylene black, carbon nanotubes (CNTs), carbon spheres, carbon ribbons, fullerenes, activated carbon, carbon nanofibers, carbon nanowires, carbon nanoballs, carbon nanohorns, carbon nanocages, carbon nanorings, ordered nano-/mesoporous carbon, carbon aerogel, mesoporous carbon, graphene, stabilized carbon, activated carbon, and combinations thereof, without being limited thereto, and any carrier that may be used in the art may be used without limitation.

The catalyst particles may be positioned on the surface of the carrier, or may penetrate into the carrier while filling the internal pores of the carrier.

When a precious metal loaded on the carrier is used as the catalyst, a commercially available catalyst may be used, or a catalyst produced by loading the precious metal on the carrier may be used. Since the process of loading the precious metal on the carrier is widely known in the art, it can be easily understood by those skilled in the art even though detailed description thereof is omitted in the present specification.

The catalyst particles may be contained in an amount of 20 wt% or more and 80 wt% or less based on the total weight of the catalyst electrode 30, 30'. If the catalyst particles are contained in an amount of less than 20 wt%, there may be a problem in that the activity decreases, and if the catalyst particles are contained in an amount of 80 wt%, the active area may be reduced due to aggregation of the catalyst particles, and thus the catalyst activity may decrease rather than increase.

In addition, the catalyst electrode 30, 30' may include a binder to improve the adhesion of the catalyst electrode 30, 30' and to transport hydrogen ions. An ion conductor having ionic conductivity is preferably used as the binder. Since the description of the ion conductor is the same as described above, the repeated description is omitted.

However, the ion conductor may be used in the form of a single material or a mixture, and may also be used together with a non-conductive compound to further improve adhesion to the polymer electrolyte membrane 50. The amount of ion conductor used is preferably adjusted to suit the purpose of use.

The non-conductive compound may be at least one selected from the group consisting of polytetrafluoroethylene (PTFE), a tetrafluoroethylene-hexafluoropropylene (FEP) copolymer, a tetrafluoroethylene-perfluoroalkyl vinyl ether (PFA) copolymer, ethylene/tetrafluoroethylene (ETFE), an ethylene chlorotrifluoroethylene (ECTFE) copolymer, polyvinylidene fluoride, a polyvinylidene fluoride-hexafluoropropylene (PVdF-HFP) copolymer, dodecylbenzenesulfonic acid, and sorbitol.

The binder may be contained in an amount of 20 wt% or more and 80 wt% or less based on the total weight of the catalyst electrode 30, 30'. If the content of the binder is less than 20 wt%, the generated ions may not be properly transferred, and if the content of the binder is more than 80 wt%, the pores may be insufficient, making it difficult to supply hydrogen or oxygen (air) and reducing the active surface area available for reaction.

As the electrode substrate 40, 40', a porous conductive substrate may be used to ensure a smooth supply of hydrogen or oxygen. Representative examples thereof include, but are not limited to, carbon paper, carbon cloth, carbon felt, or metal cloth (referring to a porous film composed of a fibrous metal cloth or a metal film formed on the surface of a cloth formed of polymer fibers). In addition, the electrode substrate 40, 40' is preferably subjected to water-repellent treatment with a fluorinated resin to prevent reactant diffusion efficiency from being reduced by water generated during fuel cell operation. As the fluorinated resin, polytetrafluoroethylene, polyvinylidene fluoride, polyhexafluoropropylene, polyperfluoroalkyl vinyl ether, polyperfluorosulfonylfluoride alkoxyvinyl ether, fluorinated ethylene propylene, polychlorotrifluoroethylene, or a copolymer thereof may be used.

In addition, the electrode substrate 40, 40' may further include a microporous layer to enhance the effect of diffusing reactants therein. This microporous layer may generally include conductive powder with a small particle diameter, such as carbon powder, carbon black, acetylene black, activated carbon, carbon fibers, fullerene, carbon nanotubes, carbon nanowires, carbon nanohorns, or carbon nanorings.

The microporous layer is prepared by coating the electrode substrate 40, 40' with a composition containing conductive powder, a binder resin, and a solvent. The binder resin may preferably be polytetrafluoroethylene, polyvinylidene fluoride, polyhexafluoropropylene, polyperfluoroalkyl vinyl ether, polyperfluorosulfonyl fluoride, alkoxyvinyl ether, polyvinyl alcohol, cellulose acetate, or a copolymer thereof. The solvent may preferably be an alcohol such as ethanol, isopropyl alcohol, n-propyl alcohol, or butyl alcohol, water, dimethylacetamide, dimethyl sulfoxide, N-methylpyrrolidone, tetrahydrofuran, or the like. Depending on the viscosity of the composition, screen printing, spray coating, or coating using a doctor blade may be used as the coating process, without being limited thereto.

One embodiment of the present disclosure includes a fuel cell including a membrane-electrode assembly for a fuel cell.

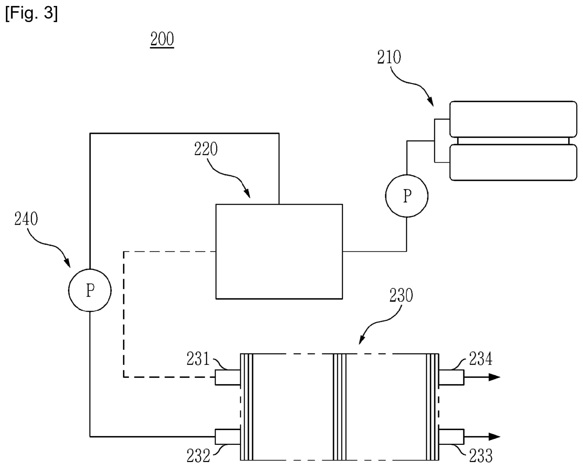

Fig. 3 is a schematic diagram illustrating the overall configuration of the fuel cell.

Referring to Fig. 3, a fuel cell 200 includes: a fuel supply unit 210 configured to supply a mixed fuel composed of fuel and water; a reforming unit 220 configured to reform the mixed fuel to generate a reformed gas containing hydrogen gas; a stack 230 configured to generate electrical energy by inducing an electrochemical reaction between the reformed gas containing hydrogen gas supplied from the reforming unit 220 and an oxidant; and an oxidant supply unit 240 configured to supply an oxidant to the reforming unit 220 and the stack 230.

The stack 230 includes a plurality of unit cells that generate electrical energy by inducing an oxidation/reduction reaction between a reformed gas containing hydrogen gas supplied from the reforming unit 220 and an oxidant supplied from the oxidant supply unit 240.

Each unit cell means a unit cell that generates electricity, and includes a membrane-electrode assembly that oxidizes/reduces a reforming gas containing hydrogen gas and the oxygen of the oxidant, and separator plates (also called bipolar plates, hereinafter referred to as "separator plates") for supplying the reformed gas containing hydrogen gas and the oxidant to the membrane-electrode assembly. The separator plates are disposed on both sides of the membrane-electrode assembly. At this time, the separator plates located at the outermost sides of the stack, respectively, are also specifically referred to as end plates.

Among the separator plates, one end plate includes a pipe-shaped first supply tube 231 for injecting a reformed gas containing hydrogen gas supplied from the reforming unit 220, and a pipe-shaped second supply tube 232 for injecting oxygen gas, and the other end plate includes a first discharge tube 233 for discharging the remaining unreacted reformed gas containing hydrogen gas from the plurality of unit cells to the outside, and a second discharge tube 234 for discharging the remaining unreacted oxidant from the unit cells to the outside.

In the fuel cell, the separator, fuel supply unit, and oxidant supply unit constituting the electricity generation unit, except for the membrane-electrode assembly 100 according to one embodiment of the present disclosure, are the same as those used in conventional fuel cells, and thus detailed description thereof will be omitted herein.

### Mode for Invention

Hereinafter, examples of the present disclosure will be described in more detail so that a person skilled in the art to which the present disclosure pertains can easily carry out the present disclosure. However, the present disclosure may be embodied in various different forms and is not limited to the examples described herein.

### [Preparation Example: Preparation of Membrane-Electrode Assembly]

### [Comparative Example 1]

A cathode electrode composition was prepared by dispersing 88 wt% of a Pt/C cathode catalyst and 12 wt% of a Nafion/H₂O/2-propanol solution as a binder by stirring and sonication methods. A cathode electrode was prepared by coating a Teflon release film with the prepared cathode electrode composition, followed by drying. At this time, the catalyst loading amount of the cathode electrode was about 0.40 mg/cm².

An anode electrode composition was prepared by dispersing 88 wt% of a Pt/C anode catalyst and 12 wt% of a Nafion/H₂O/2-propanol solution as a binder by stirring and sonication methods. An anode electrode was prepared by coating a Teflon release film with the prepared anode electrode composition, followed by drying. At this time, the catalyst loading amount of the anode electrode was about 0.10 mg/cm².

A composition for forming an interfacial adhesive layer including 5 wt% of the fluorinated ionomer PFSA with an EW of 700 or more and 800 g/eq or less and 95 wt% of an H₂O/2-propanol solution was prepared.

The prepared composition for forming an interfacial adhesive layer was applied to each of the prepared electrodes in an amount of 0.12 mg/cm² by spray coating to form an interfacial adhesive layer with a thickness of about 800 nm on the surface of the electrode.

A fluorinated polymer electrolyte membrane of PFSA with a thickness of 15 µm was interposed between the prepared cathode and anode electrodes, followed by pressing for 3 minutes under heat and pressure conditions of 160°C and 20 kgf/cm², thereby preparing a membrane-electrode assembly in which the cathode and anode electrodes were bonded to the polymer electrolyte membrane.

### [Comparative Example 2]

A membrane-electrode assembly was prepared in the same manner as in Comparative Example 1, except that a hydrocarbon-based polymer electrolyte membrane of PES was used instead of the fluorinated polymer electrolyte membrane.

### [Example 1]

A membrane-electrode assembly was prepared in the same manner as in Comparative Example 1, except that the composition for forming an interfacial adhesive layer contained 0.5 wt% of fucoidan.

### [Example 2]

A membrane-electrode assembly was prepared in the same manner as in Example 1, except that an interfacial adhesive layer with a two-layer structure was formed by additionally spray-coating the electrode having the interfacial adhesive layer formed thereon with a composition for forming an interfacial adhesive layer containing 5 wt% of a radical scavenger (CeZrO₂). At this time, the thickness ratio between the first radical-scavenging layer and the second radical-scavenging layer was 2:1. (Thickness of the first radical-scavenging layer: 600 nm, and the thickness of the second radical-scavenging layer: 300 nm)

### [Example 3]

A membrane-electrode assembly was prepared in the same manner as in Comparative Example 2, except that the composition for forming an interfacial adhesive layer contained 0.5 wt% of fucoidan.

### [Example 4]

A membrane-electrode assembly was prepared in the same manner as in Example 3, except that an interfacial adhesive layer with a two-layer structure was formed by additionally spray-coating the electrode having the interfacial adhesive layer formed thereon with a composition for forming an interfacial adhesive layer containing 5 wt% of a radical scavenger (CeZrO₂). At this time, the thickness ratio between the first radical-scavenging layer and the second radical-scavenging layer was 2:1.

### [Experimental Example: Comparison of Physical Properties of Membrane-Electrode Assemblies]

An MEA with an electrode area of 25 cm² was connected to a unit cell and stabilized by applying an electrical load step-by-step. Then, the performance of the MEA was measured at a unit cell temperature of 65°C and humidity of 100% by controlling the flow rate, temperature, humidity and the like at an MEA evaluation station (SciTech Korea, Korea).

Table 1 below shows the results of comparing the current density (A/cm²) at a cell voltage of 0.6 V. For accelerated durability evaluation, the OCV holding method, which is an electrochemical degradation method, was applied. The unit cell voltage was measured after a certain period of time under the conditions of unit cell temperature of 90°C, humidity (RH) of 30%, and pressure of 50 kPa, and the voltage reduction rate relative to the initial OCV was calculated. The hydrogen crossover was measured by linear sweep voltammetry (LSV), and the hydrogen crossover current was measured using a potentiostat (Bio Logics) at a scan rate of 0.5 mV/s while varying the voltage in the range of 0.2 to 0.8 V.

The LSV method is a method of supplying hydrogen and nitrogen to the anode and cathode, respectively, and measuring the current value resulting from hydrogen crossover. When the voltage is increased at a constant rate (linear sweep), the crossover hydrogen undergoes an oxidation reaction on the catalyst on the cathode side and releases electrons. By measuring the amount of these electrons, the amount of hydrogen that has passed through the membrane can be determined.

**[Table 1]**

| | Hydrogen crossover (mA/cm²) | Hydrogen crossover increase rate (%) | Cell voltage decrease rate (%) |
|---|---|---|---|
| Comparative Example 1 | 2.10 | 39 | 37 |
| Example 1 | 1.95 | 13 | 13 |
| Example 2 | 1.52 | 2 | 4 |
| Comparative Example 2 | 0.61 | 30 | 26 |
| Example 3 | 0.52 | 15 | 9 |
| Example 4 | 0.46 | 3 | 5 |

| | | | |
|---|---|---|---|
| * Hydrogen crossover increase rate: Hydrogen crossover increase rate after 400 hours of OCV holding relative to initial hydrogen crossover | | | |

As gas crossover increases, the OCV decreases, and the fuel efficiency decreases by the amount of fuel consumed without participating in electrochemical reactions. Hydrogen that has passed through the polymer membrane from the anode meets oxygen at the cathode and becomes H₂O, H₂O₂, HO₂, etc. through platinum catalysis, or is discharged without reacting. As these reactions proceed, a mixed potential is formed along with the oxygen reduction reaction, which is the original cathode reaction, and the OCV decreases. Hydrogen and oxygen that have passed through the membrane meet, and H₂O₂ or oxygen radicals are generated by platinum catalysis. These hydrogen peroxide or oxygen radicals attack the polymer of the electrolyte membrane, degrading the membrane and creating pinholes. The gas crossover increases due to the created pinholes, and thus the rate of generation of hydrogen peroxide and oxygen radicals increases, causing the membrane degradation to proceed rapidly. Since crossover through the electrolyte membrane significantly affects the performance and lifespan of the PEMFC, measuring the gas crossover through the PEMFC membrane is very important. Therefore, the degree of degradation of the electrolyte membrane is analyzed by measuring the above-described hydrogen permeability.

When comparing Comparative Example 1 and Example 1 in which the fluorinated polymer electrolyte membrane was used, in the case of Example 1 which includes the radical-scavenging layer containing fucoidan, the hydrogen permeability increase rate decreased by about 3 times, and the cell voltage decrease rate also decreased by about 2.8 times.

In addition, when comparing the results of Comparative Example 2 and Example 3 in which a hydrocarbon-based polymer electrolyte membrane of PES was used, the property of preventing the degradation of the hydrocarbon-based polymer electrolyte membrane was better in the Example including the radical-scavenging layer containing fucoidan. Specifically, in Example 3, the hydrogen permeability increase rate decreased by about 2 times, and the cell voltage decrease rate also decreased by about 2.9 times.

In addition, according to the results of Example 1 and Example 2, when the radical-scavenging layer containing fucoidan was laminated with the additional radical-scavenging layer, the hydrogen permeability increase rate decreased by about 6.5 times compared to that in the case of the single layer, and the cell voltage decrease rate also decreased by about 3.3 times.

In addition, according to the results of Examples 3 and 4, when the radical-scavenging layer containing fucoidan was laminated with the additional radical-scavenging layer, the hydrogen permeability increase rate decreased by about 5 times compared to that in the case of the single layer, and the cell voltage decrease rate also decreased by about 1.8 times.

Although the preferred embodiments of the present disclosure have been described in detail above, the scope of the present disclosure is not limited thereto, and various modifications and improvements made by those skilled in the art using the basic concepts of the present disclosure as defined in the appended claims also fall within the scope of the present disclosure.

### [Description of Reference Numerals]

10, 10': radical-scavenging layer
11, 11': first radical-scavenging layer
12, 12': second radical-scavenging layer
20, 20': electrode layer
30, 30': catalyst layer
40, 40': electrode substrate
50: polymer electrolyte membrane
100: membrane-electrode assembly
200: fuel cell
210: fuel supply unit
220: reforming unit
230: stack
231: first supply tube
232: second supply tube
233: first discharge tube
234: second discharge tube
240: oxidant supply unit

## Claims

1. A membrane-electrode assembly for a fuel cell, comprising:
a polymer electrolyte membrane;
a radical-scavenging layer provided on at least one surface of the polymer electrolyte membrane and containing a radical scavenger; and
an electrode layer provided on the radical-scavenging layer,
wherein the radical scavenger comprises fucoidan.

2. The membrane-electrode assembly for a fuel cell according to claim 1, wherein the radical scavenger further comprises at least one of transition metals, ions thereof, salts thereof, oxides thereof, nitrides thereof, and complexes thereof, carotenoids, flavonoids, vitamins, and glutathione.

3. The membrane-electrode assembly for a fuel cell according to claim 1, wherein fucoidan is contained in an amount of 0.2 wt% or more and 1.0 wt% or less based on the total weight of the radical-scavenging layer containing fucoidan.

4. The membrane-electrode assembly for a fuel cell according to claim 2, wherein the radical-scavenging layer comprises a first radical-scavenging layer and a second radical-scavenging layer, wherein at least one of the first radical-scavenging layer and the second radical-scavenging layer contains fucoidan.

5. The membrane-electrode assembly for a fuel cell according to claim 4, wherein the first radical-scavenging layer is positioned on the polymer electrolyte membrane,
the second radical-scavenging layer is positioned on the first radical-scavenging layer, and
a content of a radical scavenger other than fucoidan in the first radical-scavenging layer is higher than that in the second radical-scavenging layer.

6. The membrane-electrode assembly for a fuel cell according to claim 5, wherein the content of fucoidan in the first radical-scavenging layer and the content of fucoidan in the second radical-scavenging layer are the same as or different from each other.

7. The membrane-electrode assembly for a fuel cell according to claim 5, wherein the radical scavenger other than fucoidan in the first radical-scavenging layer is contained in an amount of 0.1 wt% or more and 20 wt% or less based on the total weight of the radical-scavenging layer.

8. The membrane-electrode assembly for a fuel cell according to claim 5, wherein a thickness ratio between the first radical-scavenging layer and the second radical-scavenging layer is 10:1 to 1:10.

9. The membrane-electrode assembly for a fuel cell according to claim 1, wherein the radical-scavenging layer comprises carbon nanofibers.

10. The membrane-electrode assembly for a fuel cell according to claim 5, wherein only the first radical-scavenging layer comprises carbon nanofibers.

11. The membrane-electrode assembly for a fuel cell according to claim 1, wherein the radical-scavenging layer has a thickness of 10 nm or more and 2,000 nm or less.

12. The membrane-electrode assembly for a fuel cell according to claim 1, wherein the electrode layer comprises a catalyst layer provided on a surface of an electrode substrate.

13. A fuel cell comprising the membrane-electrode assembly for a fuel cell according to claim 1.
